# EUROPEAN PATENT APPLICATION

(11) **EP 2 998 546 A1**
(43) Date of publication of application: **23.03.2016**
(21) Application number: 14885069.6
(22) Date of filing: 23.07.2014
(51) Int. Cl.: F02D 29/02, F02D 13/02, F02D 41/06, F02P 5/15, F02D 43/00, F02D 45/00, F02N 11/08

(54) **ENGINE SYSTEM AND SADDLE-TYPE VEHICLE**

(71) Applicant: Yamaha Hatsudoki Kabushiki Kaisha, Iwata-shi, Shizuoka 438-8501 (JP)
(72) Inventor: YAMAGUCHI, Yuki, Iwata-shi Shizuoka 438-8501 (JP); MASUDA, Takahiro, Iwata-shi Shizuoka 438-8501 (JP); TAKAHASHI, Seigo, Iwata-shi Shizuoka 438-8501 (JP)
(74) Representative: Zimmermann, Tankred Klaus
(86) International application number: PCT/JP2014/003882
(87) International publication number: WO 2016/013046

(57) **Abstract**

During start-up of an engine, a reverse rotation start-up operation is performed in which a crankshaft is rotated in a forward direction after being rotated in a reverse direction. An engine unit is controlled such that the reverse rotation start-up operation is performed again, in a case in which a rotation state detected by a rotation state detector does not satisfy a predetermined start-up condition when the crankshaft is rotated in the forward direction in the reverse rotation start-up operation and before a piston reaches a first compression top dead center. A fuel injection device injects fuel such that a fuel-air mixture is introduced into a combustion chamber from an intake passage through an intake port in at least the first reverse rotation operation. An ignition device ignites the fuel-air mixture in the combustion chamber.

## Description

### [Technical Field]

The present invention relates to an engine system and a straddled vehicle including the engine system.

### [Background Art]

In a straddled vehicle, such as a motorcycle, a large torque is required in order for a crank angle to exceed an angle corresponding to a first compression top dead center when a start-up operation of an engine is performed. There is a technique for rotating a crankshaft in a reverse direction in order to improve startability of the engine.

In an engine system described in Patent Document 1, during start-up of the engine, fuel is injected into an intake passage while a crankshaft is rotated in a reverse direction, and then a fuel-air mixture is introduced from the intake passage into a combustion chamber. An ignition device performs an ignition operation with the fuel-air mixture being compressed in the combustion chamber. Accordingly, the fuel-air mixture is combusted, so that rotation of the crankshaft is driven in a forward direction by energy generated in combustion.

[Patent Document 1] JP 2014-77405 A

### [Summary of Invention]

### [Technical Problem]

During a reverse rotation of the crankshaft, an intake port is opened in a range of a crank angle corresponding to a normal exhaust stroke (hereinafter referred to as a normal exhaust range) in order to introduce the fuel-air mixture from the intake passage into the combustion chamber. In the above document, a valve driver is configured such that the intake port is opened and an exhaust port is closed in the normal exhaust range during the reverse rotation of the crankshaft. The configuration of the valve driver becomes complicated in this case.

In order to reduce the tendency of complexity of the configuration of the valve driver, it is considered that the valve driver is configured such that the exhaust port is opened in the normal exhaust range during both the forward rotation and the reverse rotation of the crankshaft. In this case, however, the intake port and the exhaust port are opened simultaneously in the normal exhaust range during the reverse rotation of the crankshaft.

According to the inventors' experiments and analyses, it was observed that when the intake port and the exhaust port were opened simultaneously, a flow velocity of gas that flowed from the intake passage toward the combustion chamber was decreased, whereby the fuel was unlikely to be atomized, and an air-fuel ratio of the fuel-air mixture, which was introduced into the combustion chamber was liable to be varied. As a result, it was found that the fuel-air mixture was not appropriately combusted, so that the engine could not be appropriately started.

An object of the present invention is to provide an engine system and a straddled vehicle in which an engine can be appropriately started.

### [Solution to Problem]

(1) According to one aspect of the present invention, an engine system includes an engine unit that includes an engine and a rotation driver, and a controller that controls the engine unit, wherein the engine includes a fuel injection device that is arranged to inject fuel into an intake passage for leading air to a combustion chamber, an ignition device that is configured to ignite a fuel-air mixture in the combustion chamber, a valve driver that is configured to drive each of an intake valve for opening and closing an intake port and an exhaust valve for opening and closing an exhaust port, and a rotation state detector that detects a rotation state of a crankshaft, the rotation driver is configured to drive rotation of the crankshaft in forward and reverse directions, the controller controls the engine unit during start-up of the engine such that a reverse rotation start-up operation is performed in which the crankshaft is rotated in the forward direction after being rotated in the reverse direction, the rotation driver rotates the crankshaft in the reverse direction in the reverse rotation start-up operation such that a crank angle exceeds a predetermined start-up intake range and reaches a predetermined start-up ignition range, the valve driver drives the intake valve such that the intake port is opened when the crankshaft is rotated in the reverse direction and the crank angle is in the start-up intake range, and drives the exhaust valve such that the exhaust port is opened when the crankshaft is rotated in the reverse direction and the crank angle is in a normal exhaust range including the start-up intake range, in the reverse rotation start-up operation, the ignition device ignites the fuel-air mixture in the combustion chamber when the crank angle is in the start-up ignition range in the reverse rotation start-up operation, the controller controls the engine unit such that the reverse rotation start-up operation is performed again, in a case in which a rotation state detected by the rotation state detector does not satisfy a predetermined start-up condition when the crankshaft is rotated in the forward direction in the reverse rotation start-up operation and before a piston reaches a first compression top dead center, and the fuel injection device injects the fuel such that the fuel-air mixture is introduced into the combustion chamber from the intake passage through the intake port when the crankshaft is rotated in the reverse direction and the crank angle is in the start-up intake range, in at least the first reverse rotation operation during the start-up of the engine.
   In this engine system, the engine unit performs the reverse rotation start-up operation during the start-up of the engine. In the reverse rotation start-up operation, the crankshaft is rotated in the forward direction after being rotated in the reverse direction. The fuel is injected such that the fuel-air mixture is introduced into the combustion chamber from the intake passage through the intake port when the crankshaft is rotated in the reverse direction and the crank angle is in the start-up intake range in at least the first reverse rotation start-up operation. Further, when the crank angle is in the start-up ignition range, the fuel-air mixture in the combustion chamber is ignited by the ignition device.
   In this case, when concentration of the fuel in the fuel-air mixture is sufficiently high, the fuel-air mixture is appropriately combusted, so that the rotation of the crankshaft is driven in the forward direction by energy generated by the combustion. Therefore, the rotation state of the crankshaft satisfies the start-up condition. On the other hand, when the concentration of the fuel in the fuel-air mixture is low, the fuel-air mixture is not appropriately combusted, so that the rotation state of the crankshaft does not satisfy the start-up condition.
   The exhaust port is opened when the crankshaft is rotated in the reverse direction and the crank angle is in the normal exhaust range. In this case, the exhaust port can be opened in the same crank angle range during both the forward rotation and the reverse rotation of the crankshaft. This reduces the tendency of complexity of the configuration of the valve driver. Meanwhile, since the normal exhaust range includes the start-up intake range, the intake port and the exhaust port are opened simultaneously in the start-up intake range. Thus, a flow velocity of a gas flowing from the intake passage toward the combustion chamber is reduced, and the fuel is unlikely to be atomized. Accordingly, the concentration of the fuel in the fuel-air mixture is unlikely to be increased.
   When the rotation state of the crankshaft does not satisfy the start-up condition, the reverse rotation start-up operation is performed again. In this case, the air and the fuel flow in and among the intake passage, an exhaust passage and the combustion chamber. This promotes the atomization of the fuel and thus increases the concentration of the fuel in the fuel-air mixture. The reverse rotation start-up operation is repeated until the rotation state of the crankshaft satisfies the start-up condition. Finally, the concentration of the fuel in the fuel-air mixture is sufficiently increased, and the fuel-air mixture is appropriately combusted. Accordingly, the crankshaft is rotated such that the crank angle exceeds an angle corresponding to the first compression top dead center. As a result, the engine is appropriately started.
(2) The valve driver may drive the exhaust valve such that the exhaust port is opened when the crank angle is in the normal exhaust range during the rotation of the crankshaft in the forward direction.
   In this case, the exhaust port is opened in the same crank angle range during both the forward and reverse rotations of the crankshaft. This reduces the tendency of complexity of the configuration of the valve driver. Further, the air and the fuel flow in and between the combustion chamber and the exhaust passage when the crankshaft is rotated in the forward direction and the crank angle is in the normal exhaust range. This promotes atomization of the fuel and thus increases the concentration of the fuel in the fuel-air mixture.
(3) The controller may control the engine unit such that the crankshaft is continuously rotated in the forward direction by combustions of the fuel-air mixture, in a case in which the rotation state detected by the rotation state detector satisfies the start-up condition when the crankshaft is rotated in the forward direction in the reverse rotation start-up operation and before the piston reaches the first compression top dead center.
   When the rotation state of the crankshaft satisfies the start-up condition, the combustion of the fuel-air mixture in the reverse rotation start-up operation is appropriately performed, so that the crank angle exceeds the angle corresponding to the first compression top dead center. In that case, without repetition of the reverse rotation start-up operation, the crankshaft is continuously rotated in the forward direction by the combustions of the fuel-air mixture, whereby the engine unit can be shifted to the normal operation.
(4) The start-up condition may be that a rotation speed of the crankshaft is higher than a predetermined threshold value. In this case, it can be accurately determined whether the fuel-air mixture has been appropriately combusted.
(5) The start-up condition may be that a rate of change of a rotation speed of the crankshaft is larger than a predetermined threshold value. In this case, it can be accurately determined whether the fuel-air mixture has been appropriately combusted.
(6) The valve driver may drive the intake valve such that the intake port is opened when the crankshaft is rotated in the forward direction and the crank angle is in a predetermined normal intake range, and the controller may control the engine unit such that the reverse rotation start-up operation is performed again, in a case in which the rotation state detected by the rotation state detector does not satisfy the start-up condition at a first point of time at which the crank angle has passed the normal intake range when the crankshaft is rotated in the forward direction in the reverse rotation start-up operation.
   In this case, determination is performed as to whether the start-up condition is satisfied at the first point of time after the crankshaft is rotated to a position near the crank angle corresponding to the compression top dead center. Therefore, it can be accurately determined whether the crank angle exceeds the angle corresponding to the first compression top dead center.
(7) The fuel injection device may inject a first amount of fuel such that the fuel-air mixture is introduced into the combustion chamber from the intake passage through the intake port when the crank angle is in the normal intake range, in a case in which the rotation state detected by the rotation state detector does not satisfy a predetermined start-up preparation condition at a second point of time before the crank angle reaches the normal intake range when the crankshaft is rotated in the forward direction in the reverse rotation start-up operation, and may inject a second amount of fuel that is different from the first amount such that the fuel-air mixture is introduced into the combustion chamber from the intake passage through the intake port when the crank angle is in the normal intake range, in a case in which the rotation state detected by the rotation state detector satisfies the start-up preparation condition at the second point of time.
   In this case, when the start-up preparation condition is satisfied at the second point of time, the first amount of fuel is injected in preparation for a normal combustion stroke after the crank angle exceeds the angle corresponding to the compression top dead center, and the fuel-air mixture is introduced into the combustion chamber in the normal intake range. On the other hand, when the start-up preparation condition is not satisfied at the second point of time, the second amount of fuel is injected in preparation for the next reverse rotation start-up operation, and the fuel-air mixture is introduced into the combustion chamber in the normal intake range. In this manner, respective suitable amounts of fuel are injected in preparation for the normal combustion stroke and the next reverse rotation start-up operation.
   Further, even in a case in which the start-up preparation condition is satisfied at the second point of time, when the start-up condition is not satisfied at the first point of time, the reverse rotation start-up operation is performed again. In this manner, the determination based on the rotation state of the crankshaft is performed in a step-by-step manner, whereby the start-up of the engine can be appropriately performed.
(8) The valve driver may drive the intake valve such that the intake port is opened when the crankshaft is rotated in the forward direction and the crank angle is in a predetermined normal intake range, the fuel injection device may inject a first amount of fuel such that the fuel-air mixture is introduced into the combustion chamber from the intake passage through the intake port when the crank angle is in the normal intake range, in a case in which the rotation state detected by the rotation state detector does not satisfy the start-up condition at a second point of time before the crank angle reaches the normal intake range when the crankshaft is rotated in the forward direction in the reverse rotation start-up operation, and may inject a second amount of fuel that is different from the first amount such that the fuel-air mixture is introduced into the combustion chamber from the intake passage through the intake port when the crank angle is in the normal intake range, in a case in which the rotation state detected by the rotation state detector satisfies the start-up condition at the second point of time.
   In this case, when the start-up condition is satisfied at the second point of time, the first amount of fuel is injected in preparation for the normal combustion stroke after the crank angle exceeds the angle corresponding to the compression top dead center, and the fuel-air mixture is introduced into the combustion chamber in the normal intake range. On the other hand, when the start-up condition is not satisfied at the second point of time, the second amount of fuel is injected in preparation for the next reverse rotation start-up operation, and the fuel-air mixture is introduced into the combustion chamber in the normal intake range. In this manner, since the amount of fuel to be injected varies depending on whether the start-up condition is satisfied, the fuel-air mixture having suitable concentration for each of the normal combustion stroke and the next reverse rotation start-up operation can be introduced into the combustion chamber.
(9) The fuel injection device may inject a third amount of fuel such that the fuel-air mixture is introduced into the combustion chamber from the intake passage through the intake port when the crankshaft is rotated in the reverse direction and the crank angle is in the start-up intake range in the first reverse rotation start-up operation during the start-up of the engine, and may inject a fourth amount of fuel that is different from the third amount such that the fuel-air mixture is introduced into the combustion chamber from the intake passage through the intake port when the crankshaft is rotated in the reverse direction and the crank angle is in the start-up intake range in the second reverse rotation start-up operation during the start-up of the engine.
   In this case, the amount of fuel that is introduced into the combustion chamber in the second reverse rotation start-up operation is different from the amount of fuel that is introduced into the combustion chamber in the first reverse rotation start-up operation. Thus, the concentration of the fuel in the fuel-air mixture can be gradually increased while the fuel is prevented from being wastefully consumed.
(10) According to another aspect of the present invention, a straddled vehicle includes a main body having a drive wheel, and the above-mentioned engine system that generates motive power for rotating the drive wheel.

Since the above-mentioned engine system is used in this straddled vehicle, the engine is appropriately started.

### [Advantageous Effects of Invention]

The present invention enables an engine to be appropriately started.

### [Brief Description of Drawings]

[FIG. 1] FIG. 1 is a schematic side view showing the schematic configuration of a motorcycle according to one embodiment of the present invention.
[FIG. 2] FIG. 2 is a schematic diagram for explaining the configuration of an engine system.
[FIG. 3] FIG. 3 is a diagram for explaining a normal operation of an engine unit.
[FIG. 4] FIG. 4 is a diagram for explaining a reverse rotation start-up operation of the engine unit.
[FIG. 5] FIG. 5 is a diagram for explaining a reverse rotation start-up operation of the engine unit.
[FIG. 6] FIG. 6 is a schematic diagram for explaining the repetition of first and second combustion determinations and the reverse rotation start-up operation.
[FIG. 7] FIG. 7 is a schematic diagram for explaining the repetition of the first and second combustion determinations and the reverse rotation start-up operation.
[FIG. 8] FIG. 8 is a diagram for explaining effects caused by the repetition of the reverse rotation start-up operation.
[FIG. 9] FIG. 9 is a diagram for explaining effects caused by the repetition of the reverse rotation start-up operation.
[FIG. 10] FIG. 10 is a flow chart of an engine start-up process.
[FIG. 11] FIG. 11 is a flow chart of the engine start-up process.
[FIG. 12] FIG. 12 is a flow chart of the engine start-up process.
[FIG. 13] FIG. 13 is a schematic diagram for explaining another example of the reverse rotation start-up operation.
[FIG. 14] FIG. 14 is a diagram for explaining another example of the amount of injection of fuel.

### [Description of Embodiments]

A motorcycle will be described below as an example of a straddled vehicle according to embodiments of the present invention with reference to the drawings.

### (1) Motorcycle

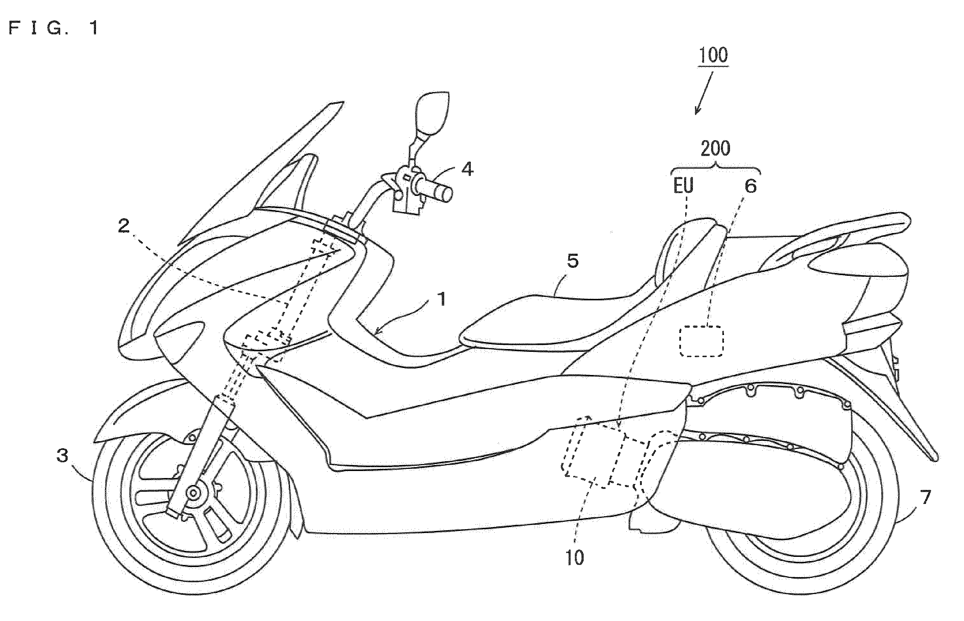

Fig. 1 is a schematic side view showing the schematic configuration of a motorcycle according to one embodiment of the present invention. In the motorcycle 100 of Fig. 1, a front fork 2 is provided at a front of a vehicle body 1 to be swingable to the right and the left. A handle 4 is attached to the upper end of the front fork 2, and a front wheel 3 is rotatably attached to the lower end of the front fork 2.

A seat 5 is provided at substantially the center of the upper portion of the vehicle body 1. An ECU (Engine Control Unit) 6 and an engine unit EU are provided below the seat 5. The engine unit EU includes, for example, a single-cylinder engine 10. The ECU 6 and the engine unit EU constitute an engine system 200. A rear wheel 7 is rotatably attached to the lower portion of the rear end of the vehicle body 1. The rotation of the rear wheel 7 is driven by motive power generated by the engine 10.

### (2) Engine System

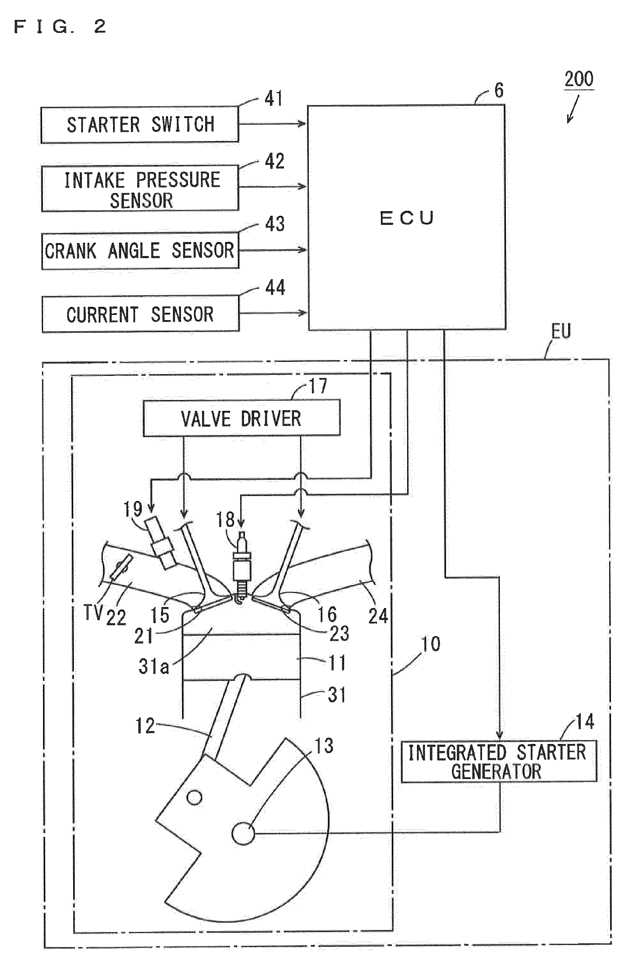

Fig. 2 is a schematic diagram for explaining the configuration of the engine system 200. As shown in Fig. 2, the engine unit EU includes the engine 10 and an integrated starter generator 14. The engine 10 includes a piston 11, a connecting rod 12, a crankshaft 13, an intake valve 15, an exhaust valve 16, a valve driver 17, an ignition plug 18, and an injector 19.

The piston 11 is provided to be reciprocatable in a cylinder 31 and connected to the crankshaft 13 via the connecting rod 12. The reciprocating motion of the piston 11 is converted into the rotational motion of the crankshaft 13. The crankshaft 13 is provided with the integrated starter generator 14. The integrated starter generator 14 is a generator having a starter motor function, which drives the crankshaft 13 to rotate in forward and reverse directions and generates electric power with the rotation of the crankshaft 13. The forward direction is the direction of rotation of a crankshaft 210 during the normal operation of the engine 10, whereas the reverse direction is the opposite direction to the forward direction. The integrated starter generator 14 transmits a torque directly to the crankshaft 13 without a reduction gear provided therebetween. The rotation of the crankshaft 13 in the forward direction (forward rotation) is transmitted to the rear wheel 7, so that the rotation of the rear wheel 7 is driven.

A combustion chamber 31 a is formed on the piston 11. The combustion chamber 31a communicates with an intake passage 22 through an intake port 21 and communicates with an exhaust passage 24 through an exhaust port 23. The intake valve 15 is provided to open and close the intake port 21, and the exhaust valve 16 is provided to open and close the exhaust port 23. The intake valve 15 and the exhaust valve 16 are driven by the valve driver 17. The intake passage 22 is provided with a throttle valve TV for adjusting the flow rate of air that flows in from outside. The ignition plug 18 is configured to ignite a fuel-air mixture in the combustion chamber 31a. The injector 19 is configured to inject fuel into the intake passage 22.

The ECU 6 includes, for example, a CPU (Central Processing Unit) and a memory. The CPU and the memory may be replaced with a microcomputer. The ECU 6 is electrically connected with a starter switch 41, an intake pressure sensor 42, a crank angle sensor 43, and a current sensor 44. The starter switch 41 is provided on the handle 4 of Fig. 1, for example, to be operated by a driver. The intake pressure sensor 42 detects pressure in the intake passage 22. The crank angle sensor 43 detects a rotational position of the crankshaft 13 (hereinafter referred to as a crank angle). The current sensor 44 detects a current flowing through the integrated starter generator 14 (hereinafter referred to as a motor current).

An operation of the starter switch 41 is applied as an operation signal to the ECU 6, and the results of detection by the intake pressure sensor 42, the crank angle sensor 43, and the current sensor 44 are applied as detection signals to the ECU 6. The ECU 6 controls the integrated starter generator 14, the ignition plug 18 and the injector 19 on the basis of the applied operation and detection signals.

### (3) Operation of Engine

For example, the engine 10 is started when the starter switch 41 of Fig. 2 is turned on, whereas the engine 10 is stopped when a main switch not shown is turned off. Also, when a predetermined idle stop condition is satisfied, the engine 10 may automatically be stopped. After that, when a predetermined idle stop release condition is satisfied, the engine 10 may be automatically re-started. The idle stop condition includes a condition that relates to at least one of, for example, throttle opening (the degree of opening of a throttle valve TV), vehicle speed, and rotation speed of the engine 10. The idle stop release condition refers to, for example, the throttle opening being larger than 0 when an accelerator grip is operated. A state where the engine 10 is automatically stopped with the idle stop condition being satisfied is hereinafter referred to as an idle stop state.

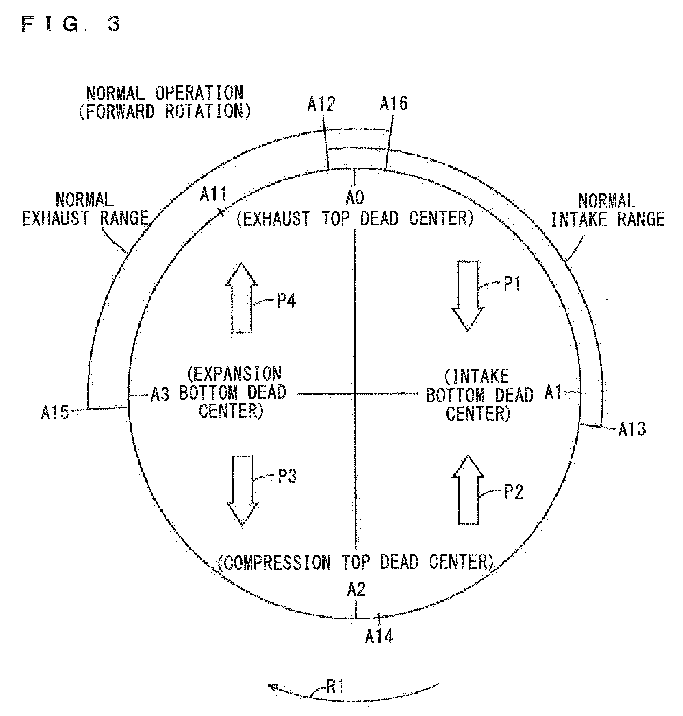

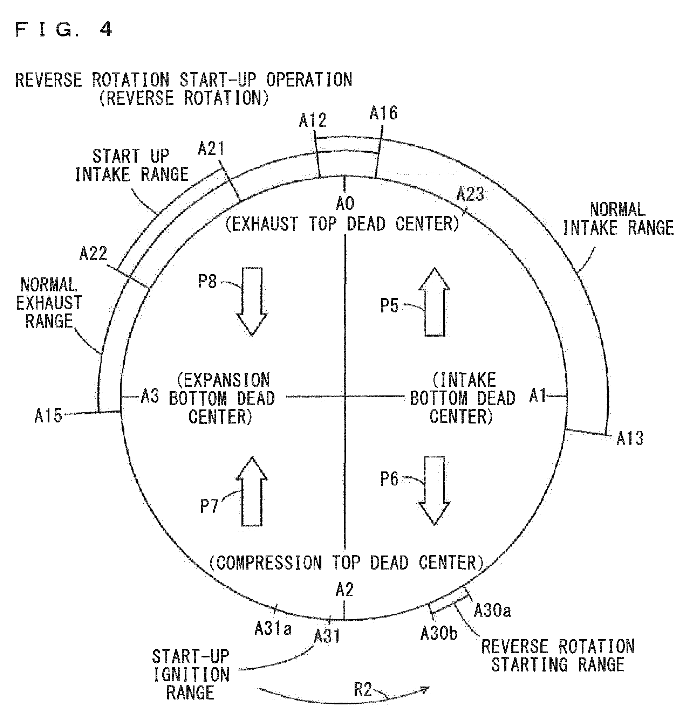

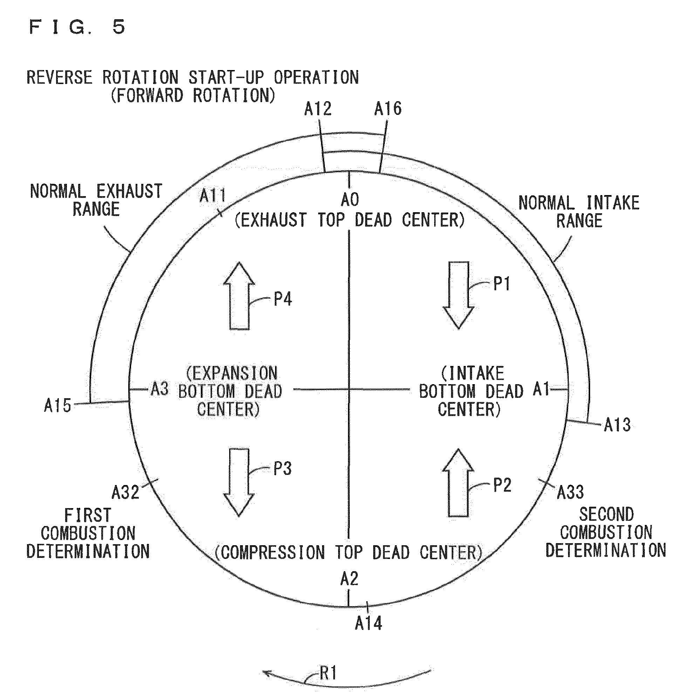

During start-up of the engine 10, the engine unit EU performs a reverse rotation start-up operation. Thereafter, when the crank angle exceeds an angle that corresponds to a first compression top dead center, the engine unit EU performs the normal operation. Fig. 3 is a diagram for explaining the normal operation of the engine unit EU. Figs. 4 and 5 are diagrams for explaining the reverse rotation start-up operation of the engine unit EU.

In the following description, a top dead center through which the piston 11 passes at the time of shifting from a compression stroke to an expansion stroke is referred to as a compression top dead center, and a top dead center through which the piston 11 passes at the time of shifting from an exhaust stroke to an intake stroke is referred to as an exhaust top dead center. A bottom dead center through which the piston 11 passes at the time of shifting from the intake stroke to the compression stroke is referred to as an intake bottom dead center, and a bottom dead center through which the piston 11 passes at the time of shifting from the expansion stroke to the exhaust stroke is referred to as an expansion bottom dead center.

In Figs. 3 to 5, a rotation angle in a range in which the crankshaft 13 makes two rotations (720 degrees) is represented by one circle. The two rotations of the crankshaft 13 are equivalent to one cycle of the engine 10. The crank angle sensor 43 of Fig. 2 detects a rotational position in a range in which the crankshaft 13 makes one rotation (360 degrees). Based on the pressure in the intake passage 22 detected by the intake pressure sensor 42, the ECU 6 determines which one of the two rotations of the crankshaft 13, equivalent to one cycle of the engine 10, the rotational position detected by the crank angle sensor 43 corresponds to. Thus, the ECU 6 can acquire the rotational position in the range of two rotations (720 degrees) of the crankshaft 13.

In Figs. 3 to 5, an angle A0 is a crank angle when the piston 11 (Fig. 2) is positioned at the exhaust top dead center, an angle A2 is a crank angle when the piston 11 is positioned at the compression top dead center, an angle A1 is a crank angle when the piston 11 is positioned at the intake bottom dead center, and an angle A3 is a crank angle when the piston 11 is positioned at the expansion bottom dead center. An arrow R1 indicates a direction in which the crank angle changes during the forward rotation of the crankshaft 13, an arrow R2 indicates a direction in which the crank angle changes during the reverse rotation of the crankshaft 13. Arrows P1 to P4 indicate directions in which the piston 11 moves during the forward rotation of the crankshaft 13. Arrows P5 to P8 indicate directions in which the piston 11 moves during the reverse rotation of the crankshaft 13.

### (3-1) Normal Operation

The normal operation of the engine unit EU will be described with reference to Fig. 3. In the normal operation, the crankshaft 13 (Fig. 2) is rotated in the forward direction. Thus, the crank angle changes in the direction of the arrow R1. In this case, as indicated by the arrows P1 to P4, the piston 11 (Fig. 2) is lowered in the range from the angle A0 to the angle A1, raised in the range from the angle A1 to the angle A2, lowered in the range from the angle A2 to the angle A3, and raised in the range from the angle A3 to the angle A0.

At an angle A11, fuel is injected into the intake passage 22 (Fig. 2) by the injector 19 (Fig. 2). The angle A11 is positioned at a further advanced angle than the angle A0 in the forward direction. The intake port 21 (Fig. 2) is subsequently opened by the intake valve 15 (Fig. 2) in the range from an angle A12 to an angle A13. The angle A12 is positioned at a further retarded angle than the angle A11 and at a further advanced angle than the angle A0, and the angle A13 is positioned at a further retarded angle than the angle A1 in the forward direction. The range from the angle A12 to the angle A13 is an example of a normal intake range. This allows a fuel-air mixture including air and fuel to be introduced into the combustion chamber 31 a (Fig. 2) through the intake port 21.

Then, at an angle A14, the fuel-air mixture in the combustion chamber 31a (Fig. 2) is ignited by the ignition plug 18 (Fig. 2). The angle A14 is positioned at a further advanced angle than the angle A2 in the forward direction. The ignited fuel-air mixture causes explosion (combustion of the fuel-air mixture) in the combustion chamber 31a. Energy generated by the combustion of the fuel-air mixture turns to a driving force of the piston 11. After that, the exhaust port 23 (Fig. 2) is opened by the exhaust valve 16 (Fig. 2) in the range from an angle A15 to an angle A16. The angle A15 is positioned at a further advanced angle than the angle A3, and the angle A16 is positioned at a further retarded angle than the angle A0 in the forward direction. The range from the angle A15 to the angle A16 is an example of the normal intake range. This allows the combusted air to be exhausted from the combustion chamber 31a through the exhaust port 23.

### (3-2) Reverse Rotation Start-up Operation

The reverse rotation start-up operation of the engine unit EU will be described with reference to Figs. 4 and 5. In the reverse rotation start-up operation, the crankshaft 13 is rotated forward after it is rotated reversely. In this case, the reverse rotation of the crankshaft 13 causes the fuel-air mixture to be compressed and then ignited in the combustion chamber 31 a, and also the crankshaft 13 is rotated forward. When the fuel-air mixture is appropriately combusted, a torque of the crankshaft 13 in the forward direction is sufficiently increased with the energy generated by the combustion. Accordingly, the crank angle exceeds the angle A2 corresponding to the first compression top dead center. On the other hand, when the fuel-air mixture is not appropriately combusted, the torque of the crankshaft 13 in the forward direction is not sufficiently increased. Accordingly, the crank angle does not exceed the angle A2 corresponding to the first compression top dead center. Thus, in this embodiment, the reverse rotation star-up operation is repeated until the fuel-air mixture is successfully combusted. The successful combustion of the fuel-air mixture means that the fuel-air mixture is appropriately combusted by ignition. The reverse rotation start-up operation will be described in detail below.

In this example, the crank angle is adjusted in a predetermined reverse rotation starting range before a first reverse rotation start-up operation is performed. The reverse rotation staring range is, for example, in a range from the angle A0 to the angle A2 in the forward direction and preferably in a range from the angle A13 to the angle A2. In Fig. 4, the reverse rotation starting range is a range from an angle A30a to an angle A30b. The angular range A30a, A30b is in a range from the angular range A13 to the angle A2.

As shown in Fig. 4, the crankshaft 13 is rotated in the reverse direction from a state where the crank angle is in the reverse rotation staring range. Then, the crank angle changes in the direction of the arrow R2. In this case, as indicated by the arrows P5 to P8, the piston 11 is lowered in a range from the angle A2 to the angle A1, raised in a range from the angle A1 to the angle A0, lowered in a range from the angle A0 to the angle A3, and raised in a range from the angle A3 to the angle A2. The moving direction of the piston 11 during the reverse rotation of the crankshaft 13 is opposite to the moving direction of the piston 11 during the forward rotation of the crankshaft 13.

At an angle A23, the fuel is injected into the intake passage 22 (Fig. 2) by the injector 19 (Fig. 2). In the reverse direction, the angle A23 is positioned at a further advanced angle than the angle A0. As described below, in this example, the amount of injection of the fuel at the angle A23 in the first reverse rotation start-up operation differs from the amount of injection of the fuel at the angle A23 in a second and subsequent reverse rotation start-up operations.

In a range from the angle A13 to the angle A12 and in a range from the angle A21 to an angle A22, the intake port 21 (Fig. 2) is opened by the intake valve 15 (Fig. 2). The range from the angle A21 to the angle A22 is an example of a start-up intake range. In the reverse direction, the angles A21, A22 are in the range from the angle A0 to the angle A3. In this case, since the piston 11 is raised in the range from the angle A1 to the angle A0, air or fuel is hardly introduced into the combustion chamber 31a in the range from the angle A13 to the angle A12. Thereafter, since the piston 11 is lowered in the range from the angle A0 to the angle A3, the fuel-air mixture containing air and fuel is introduced from the intake passage 22 into the combustion chamber 31a through the intake port 21 in the range from the angle A21 to the angle A22.

In a range from an angle A16 to an angle A15, the exhaust port 23 (Fig. 2) is opened by the exhaust valve 16 (Fig. 2). In this case, since the piston 11 is lowered in the range from the angle A0 to the angle A3, gas is led to the combustion chamber 31 a from the exhaust passage 24. As describe below, an uncombusted fuel-air mixture staying in the exhaust passage 24 is led into the combustion chamber 31 a in the second and subsequent reverse rotation staring operations.

Energization of an ignition coil connected to the ignition plug 18 (Fig. 2) is started at an angle 31 a, and the fuel-air mixture in the combustion chamber 31 a is ignited by the ignition plug 18 (Fig. 2) at an angle 31a. In the reverse direction, the angle A31a is positioned at a further advanced angle than the angle A31, and the angle A31 is positioned at a further advanced angle than the angle A2. The angle A31 is an example of a start-up ignition range.

At the angle A31, the fuel-air mixture is ignited, and the crankshaft 13 is rotated in the forward direction. Thus, as shown in Fig. 5, the crank angle is changed in the direction of the arrow R1. Similarly to the normal operation of Fig. 3, the exhaust port 23 (Fig. 2) is opened by the exhaust valve 16 (Fig. 2) in a range from an angle A15 to an angle A16. If the fuel-air mixture is successfully combusted right before this opening of the exhaust port 23, then the combusted gas is led to the exhaust passage 24 from the combustion chamber 31a. On the other hand, if the fuel-air mixture is not successfully combusted, then the uncombusted fuel-air mixture is led to the exhaust passage 24 from the combustion chamber 31 a.

The fuel is injected into the intake passage 22 (Fig. 2) by the injector 19 (Fig. 2) at the angle A11, and the intake port 21 (Fig. 2) is opened by the intake valve 15 (Fig. 2) in the range from the angle A12 to the angle A13. Thus, the fuel-air mixture is introduced from the intake passage 22 into the combustion chamber 31a. As described below, in this example, the amount of injection of the fuel at the angle A11 in the reverse rotation start-up operation varies depending on the result of determination as to whether the fuel-air mixture has been successfully combusted.

In the reverse rotation start-up operation, a combustion determination as to whether the fuel-air mixture has been successfully combusted is performed after the ignition at the angle A31 and before the crank angle reaches the angle A2 corresponding to the first compression top dead center. In this example, a first combustion determination is performed at an angle A32, and a second combustion determination is performed at an angle A33. A point of time at which the crank angle reaches the angle A33 is an example of a first point of time, and a point of time at which the crank angle reaches the angle A32 is an example of a second point of time. In the forward direction, the angle A32 is positioned at a further advanced angle than the angle A15, and the angle A33 is positioned at a further retarded angle than the angle A13.

In the first combustion determination, it is determined based on a result of detection by the crank angle sensor 43 (Fig. 2) whether the rotation state of the crankshaft 13 satisfies a predetermined first condition. Similarly, in the second combustion determination, it is determined based on a result of detection by the crank angle sensor 43 (Fig. 2) whether the rotation state of the crankshaft 13 satisfies a predetermined second condition.

The rotation state of the crankshaft 13 is, for example, a rotational speed of the crankshaft 13 or a rate of change of the rotational speed (rotational acceleration) of the crankshaft 13. Each of the first and second conditions is, for example, that the rotational speed or the rotational acceleration of the crankshaft 13 is higher than a predetermined threshold value. In this case, the threshold value of the first condition and that of the second condition are different from each other. Accordingly, it can be accurately determined whether the fuel-air mixture has been appropriately combusted.

It is determined based on the results of the first and second combustion determinations whether the the fuel-air mixture has been successfully combusted. In this example, when the first condition is satisfied in the first combustion determination, and the second condition is satisfied in the second combustion determination, it is determined that the fuel-air mixture has been successfully combusted. In the other cases, it is determined that the fuel-air mixture has not been successfully combusted.

The determination as to whether the fuel-air mixture has been successfully combusted is not limited to the above-mentioned example. When at least either one of the first condition of the first combustion determination and the second condition of the second combustion determination is satisfied, it may be determined that the fuel-air mixture has been successfully combusted. For example, the second combustion determination is performed at a point of time at which the crank angle is close to the angle A2 corresponding to the compression top dead center. Thus, when the second condition is satisfied in the second combustion determination, it is more likely that the fuel-air mixture has been successfully combusted. Therefore, even when the first condition is not satisfied in the first combustion determination, it may be determined that the fuel-air mixture has been successfully combusted if the second condition is satisfied in the second combustion determination. Furthermore, even when the first condition is satisfied in the first combustion determination, it may be determined that the fuel-air mixture has not been successfully combusted unless the second condition is satisfied in the second combustion determination.

Alternatively, the determination as to whether the fuel-air mixture has been successfully combusted may be performed in consideration of both the rotational speed of the crankshaft 13 at the time of the first combustion determination and the rotational speed of the crankshaft 13 at the time of the second combustion determination. For instance, when an average value of the rotational speed of the crankshaft 13 at the time of the first combustion determination and the rotational speed of the crankshaft 13 at the time of the second combustion determination is higher than a predetermined value, it may be determined that the fuel-air mixture has been successfully combusted. Similarly, the determination as to whether the fuel-air mixture has been successfully combusted may be performed in consideration of both the rotational acceleration of the crankshaft 13 at the time of the first combustion determination and the rotational acceleration of the crankshaft 13 at the time of the second combustion determination.

When the fuel-air mixture has been successfully combusted, the engine unit EU is shifted to the normal operation of Fig. 3. On the other hand, when the fuel-air mixture has not been successfully combusted, the reverse rotation start-up operation is repeated until the fuel-air mixture is successfully combusted.

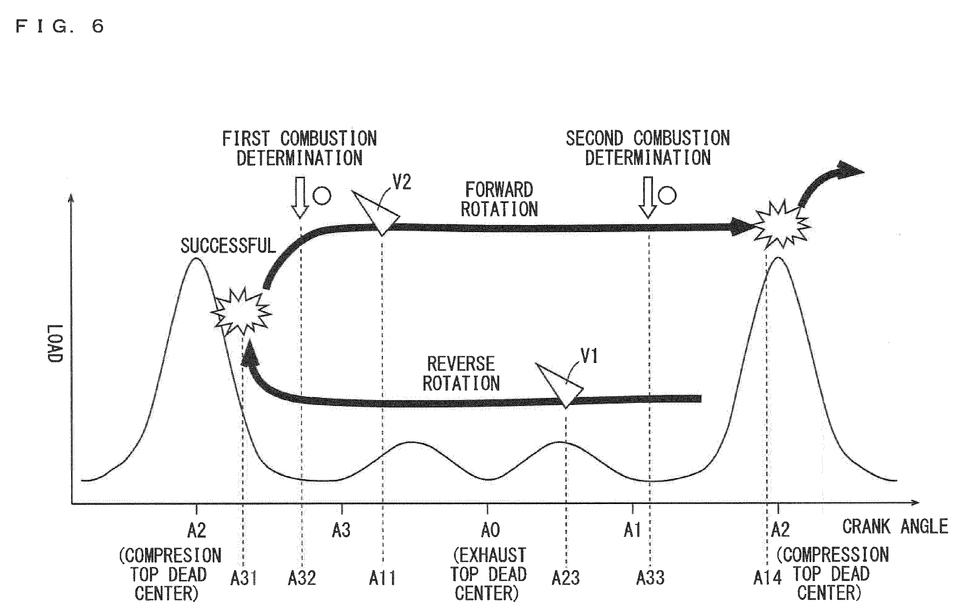

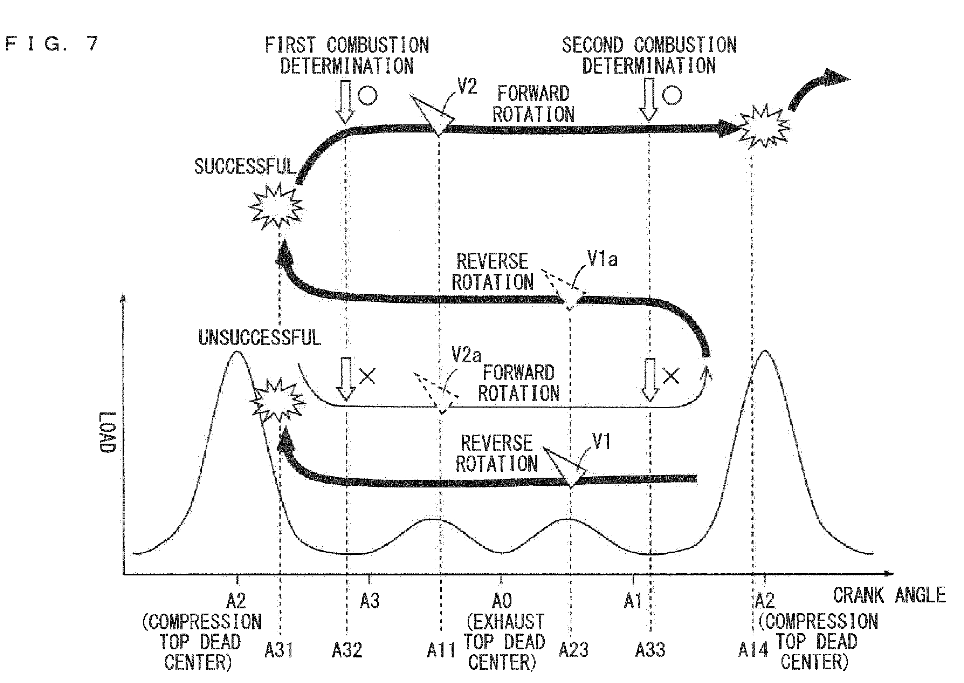

Figs. 6 and 7 are schematic diagrams for explaining the first and second combustion determinations and the repetition of the reverse rotation start-up operation. Figs. 6 and 7 show, for reference, a relationship between the crank angle and a rotational load of the crankshaft 13. The abscissa represents the crank angle, and the ordinate represents the rotational load of the crankshaft 13.

As shown in Figs. 6 and 7, the rotational load of the crankshaft 13 is the largest at the angle A2 corresponding to the compression top dead center. Also, in the examples of Figs. 6 and 7, a load for driving the intake valve 15 is applied to the crankshaft 13 at an intermediate position between the angle A1 and the angle A0, so that the rotational load of the crankshaft 13 is increased. Further, a load for driving the exhaust valve 16 is applied to the crankshaft 13 at an intermediate position between the angle A0 and the angle A3, so that the rotational load of the crankshaft 13 is increased.

In the example of Fig. 6, the fuel is injected at the angle A23 while the crankshaft 13 is rotated in the reverse direction. In the first reverse rotation start-up operation, the amount of injection of the fuel at the angle A23 is set to V1. The amount V1 is an example of a third amount.

At the angle A31, the fuel-air mixture is successfully combusted. Thus, the fuel-air mixture is appropriately combusted, and the crankshaft 13 is driven in the forward direction. Accordingly, the first condition is satisfied in the first combustion determination at the angle A32. When the first condition is satisfied in the first combustion determination, the amount of injection of fuel at the angle A11 is set to V2. The amount V2 is an amount that is prepared for ignition at the angle A14 in the normal operation. The amount V2 is an example of a second amount.

After that, the second condition is satisfied in the second combustion determination at the angle A33. In this manner, when the first and second conditions are satisfied in the first and second combustion determinations, respectively, the engine unit EU is shifted to the normal operation without the repetition of the reverse rotation start-up operation. More specifically, the crank angle exceeds the angle A2 which corresponds to the compression top dead center, and the fuel-air mixture is ignited at the angle A14.

As for the example of Fig. 7, differences from the example of Fig. 6 will be described. In the example of Fig. 7, the fuel-air mixture is not successfully combusted by the ignition at the angle A31 in the first reverse rotation start-up operation. Thus, the first condition is not satisfied in the first combustion determination at the angle A32. When the first condition is not satisfied in the first combustion determination, the amount of injection of fuel is set to V2a at the angle A11. The amount V2a is an amount that is prepared for ignition in a subsequent reverse rotation start-up operation and is smaller than the amount V2 set in the example of Fig. 6. The amount V2a is an example of a first amount. In this case, the fuel is prevented from being wastefully consumed.

Thereafter, the second condition is not satisfied in the second combustion determination at the angle A33 either. In this manner, when the first and second conditions are not satisfied, respectively, in the first and second combustion determinations, the direction of the rotation of the crankshaft 13 is switched to the reverse direction again, and the reverse rotation start-up operation is repeated.

In the second and subsequent reverse rotation start-up operations, the amount of injection of the fuel at the angle A23 during the reverse rotation is set to V1 a. The amount V1a is an example of a fourth amount and is smaller than the amount V1 set in the first reverse rotation start-up operation. In this case, the fuel is prevented from being wastefully consumed.

The fuel-air mixture is successfully combusted by the ignition at the angle A31 in the second reverse rotation start-up operation. Thus, the fuel-air mixture is appropriately combusted, and the crankshaft 13 is driven in the forward direction. Therefore, the first condition is satisfied in the first combustion determination at the angle A32. In this case, the amount of injection of the fuel at the angle A11 is set to V2. After that, the second condition is satisfied in the second combustion determination at the angle A33. Accordingly, the engine unit EU is shifted to the normal operation without the repetition of the reverse rotation start-up operation.

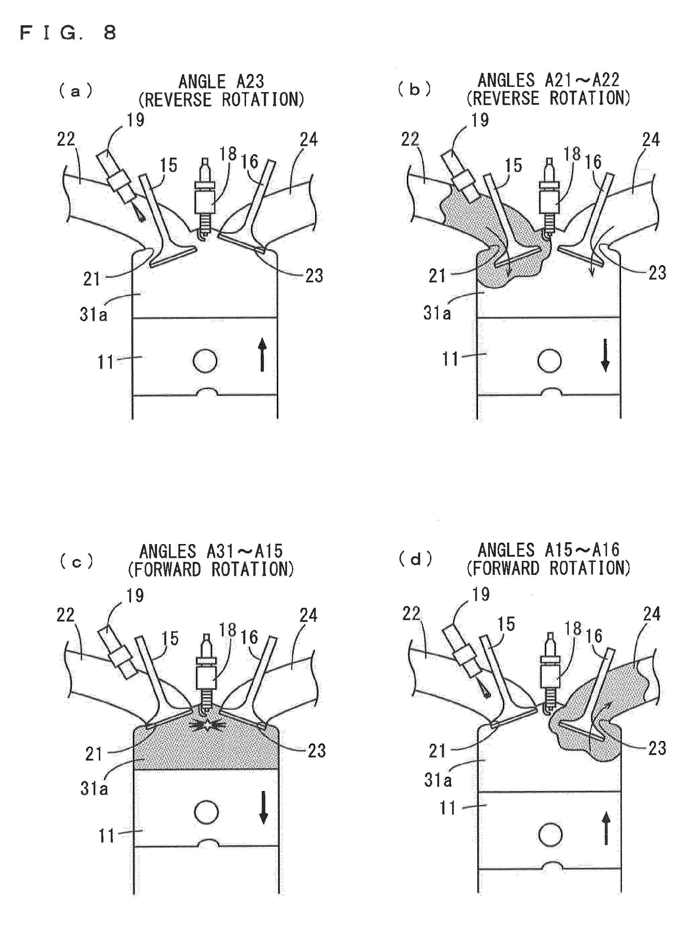

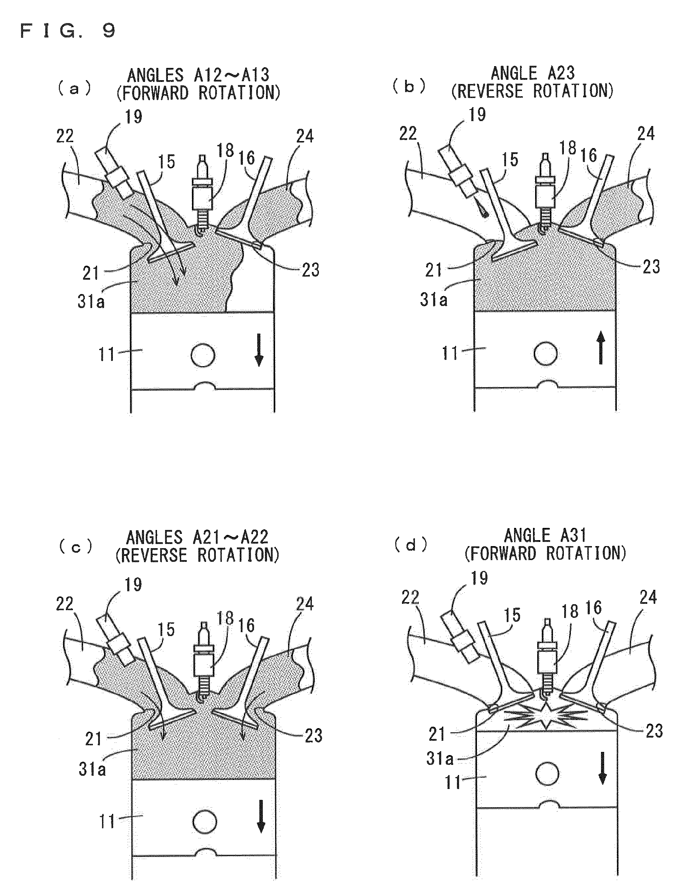

As shown in the example of Fig. 7, when the reverse rotation start-up operation is repeated, it is more likely that the fuel-air mixture will be successfully combusted. Reasons for this will be described below. Figs. 8 and 9 are diagrams for explaining effects caused by the repetition of the reverse rotation start-up operation.

First, a function in the first reverse rotation start-up operation will be described. As shown in Fig. 8(a), fuel is injected into the intake passage 22 at the angle A23 while the crankshaft 13 is rotated in the reverse direction. As described above, the piston 11 is raised at the angle A23, so that the fuel is not introduced into the combustion chamber 31 a.

The injected fuel vaporizes in the intake passage 22, so that a fuel-air mixture is produced. In this case, when the temperature of the engine 10 is high, the fuel is likely to vaporize, so that the fuel-air mixture is likely to be produced. On the other hand, when the temperature of the engine 10 is low, the fuel is unlikely to vaporize, so that the fuel-air mixture is unlikely to be produced. Normally, the temperature of the engine 10 is high right after the engine 10 is stopped, and when a long period of time has elapsed after the stop of the engine 10, the temperature of the engine 10 is reduced. Therefore, during re-start from the idle stop state, for example, the fuel is likely to vaporize, so that the fuel-air mixture is likely to be produced. On the other hand, during cold start-up, the fuel is unlikely to vaporize, so that the fuel-air mixture is unlikely to be produced.

Subsequently, as shown in Fig. 8(b), the fuel-air mixture is introduced from the intake passage 22 into the combustion chamber 31a through the intake port 21 in the range from the angle A21 to the angle A22. In this period, the exhaust port 23 is opened, so that gas is introduced also into the combustion chamber 31a from the exhaust port 23. In this manner, when the intake port 21 and the exhaust port 23 are both opened, a flow velocity of gas from the intake passage 22 to the combustion chamber 31a is lower as compared to a case in which only the intake port 21 is opened. Thus, part of the fuel-air mixture in the intake passage 22 may remain in the intake passage 22 without being introduced into the combustion chamber 31 a.

Further, part of the fuel which has not vaporized in the intake passage 22 is moved to the combustion chamber 31a by a flow of gas passing through the intake passage 22. In this case, when the flow velocity of the gas passing through the intake passage 22 is high, the fuel is atomized (reduced in particle size), so that fuel-air mixture concentration is increased. The fuel-air mixture concentration means the concentration of the fuel in the fuel-air mixture. However, as described above, the flow velocity of the gas passing through the intake passage 22 is low in the range from the angle A21 to the angle A22, so that the fuel is unlikely to be atomized.

In this manner, in the reverse rotation start-up operation, the fuel-air mixture is unlikely to be sufficiently introduced into the combustion chamber 31a from the intake passage 22, and unvaporized fuel is unlikely to be atomized. Further, during the cold start-up, the fuel-air mixture is unlikely to be produced in the intake passage 22. Therefore, in the first reverse rotation start-up operation, the fuel-air mixture concentration in the combustion chamber 31 a is likely to be lower than an appropriate value. As a result, as shown in Fig. 8(c), it is likely that the fuel-air mixture is not successfully combusted by the ignition at the angle A31.

When the fuel-air mixture is not successfully combusted, as shown in Fig. 8(d), the uncombusted fuel-air mixture in the combustion chamber 31a is led to the exhaust passage 24 through the exhaust port 23 in the range from the angle A15 to the angle A16 while the crankshaft 13 is rotated in the forward direction. In a period in which the reverse rotation start-up operation is performed, the flow velocity of the gas passing through the exhaust passage 24 is low. Therefore, a large part of the fuel-air mixture led to the exhaust passage 24 remains in the exhaust passage 24 without being exhausted to the outside. Further, the unvaporized fuel is also moved to the exhaust passage 24 from the combustion chamber 31 a together with the fuel-air mixture. Further, at the angle A11 in the range from the angle A15 to the angle A16, the fuel is injected into the intake passage 22.

Subsequently, as shown in Fig. 9(a), the fuel-air mixture is introduced into the combustion chamber 31 a through the intake port 21 in the range from the angle A12 to the angle A13. In this case, only the intake port 21 is opened except for a range from the angle A12 to the angle A16 (Fig. 5) (overlap). Therefore, the flow velocity of the gas from the intake passage 22 to the combustion chamber 31a is relatively high. Thus, the fuel-air mixture in the intake passage 22 is efficiently introduced into the combustion chamber 31a, and the fuel is likely to be atomized by the flow of the gas passing through the intake passage 22. Thereafter, the rotation direction of the crankshaft 13 is switched to the reverse direction.

The second reverse rotation start-up operation will be described. As shown in Fig. 9(b), the fuel is injected into the intake passage 22 at the angle A23 while the crankshaft 13 is rotated in the reverse direction. Then, as shown in Fig. 9(c), the fuel-air mixture is introduced into the combustion chamber 31a from the intake passage 22 through the intake port 21 in the range from the angle A21 to the angle A22. In this case, the fuel-air mixture, which remains in the exhaust passage 24, is introduced into the combustion chamber 31a through the exhaust port 23.

Thus, the fuel-air mixture in the combustion chamber 31a includes each of the fuel injected at the angle A23 in the first reverse rotation start-up operation (Fig. 8(a)), the fuel injected at the angle A11 in the first reverse rotation start-up operation (Fig. 8(d)), and the fuel injected at the angle A23 in the second reverse rotation start-up operation (Fig. 9(b)). In this manner, the reverse rotation start-up operation is repeated, so that the fuel in the combustion chamber 31 a is accumulated.

Further, the unvaporized fuel is introduced into the combustion chamber 31 a from the intake passage 22 and the exhaust passage 24. The unvaporized fuel flows in the intake passage 22, the combustion chamber 31 a and the exhaust passage 24, thereby being gradually atomized. Therefore, the reverse rotation start-up operation is repeated, so that atomization of the fuel is progressed. Further, the temperature of the engine 10 is increased by the repetition of the reverse rotation start-up operation, so that the fuel is likely to vaporize.

Accordingly, with the repetition of the reverse rotation start-up operation, the fuel-air mixture concentration in the combustion chamber 31a is increased. As a result, as shown in Fig. 9(d), the fuel-air mixture is successfully combusted by the ignition at the angle A31.

### (4) Engine Start-up Process

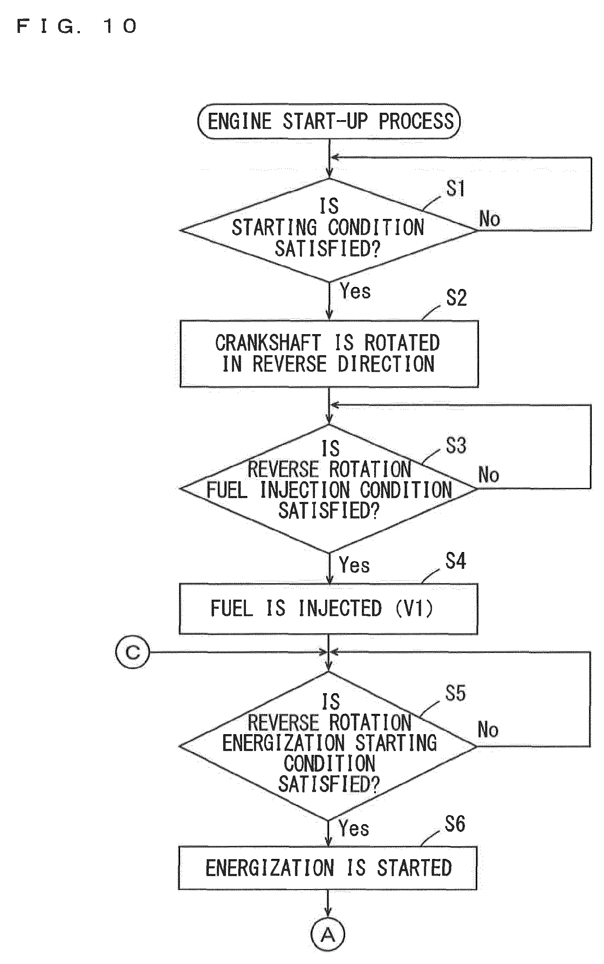

The ECU 6 performs the engine start-up process based on a control program that is stored in advance in the memory. Figs. 10 to 12 are flow charts of the engine start-up process. The engine start-up process is performed when a main switch (not shown) is turned on, or when the engine 10 is shifted to the idle stop state.

As shown in Fig. 10, the ECU 6 determines whether a predetermined starting condition is satisfied (step S1). When the engine unit EU is not in the idle stop state, the starting condition is that the starter switch 41 (Fig. 2) is turned on, for example. When the engine unit EU is in the idle stop state, the starting condition is that an idle stop release condition is satisfied.

When the starting condition is not satisfied, the ECU 6 repeats the process of step S1 until the starting condition is satisfied. When the starting condition is satisfied, the ECU 6 controls the integrated starter generator 14 such that the crankshaft 13 is rotated in the reverse direction (step S2).

At the start of the engine start-up process, when the crank angle is not in the reverse rotation starting range (the range from the angle A30a to A30b), the crank angle may be adjusted in the reverse rotation starting range before the crankshaft 13 is rotated in the reverse direction as described above.

Next, the ECU 6 determines whether a reverse rotation fuel injection condition is satisfied (step S3). In the present example, the reverse rotation fuel injection condition is that the crank angle acquired from results of detection by the intake pressure sensor 42 (Fig. 2) and the crank angle sensor 43 (Fig. 2) reaches the angle A23 of Fig. 4. When the reverse rotation fuel injection condition is not satisfied, the ECU 6 repeats the process of step S3. When the reverse rotation fuel injection condition is satisfied, the ECU 6 controls the injector 19 (Fig. 2) such that the fuel is injected into the intake passage 22 (Fig. 2) (step S4). In this case, the amount of injection of the fuel is set to V1.

Then, the ECU 6 determines whether a reverse rotation energization starting condition is satisfied (step S5). In the present example, the reverse rotation energization starting condition is that the crank angle acquired from the results of detection by the intake pressure sensor 42 (Fig. 2) and the crank angle sensor 43 (Fig. 2) reaches the angle A31a of Fig. 4. When the reverse rotation energization starting condition is not satisfied, the ECU 6 repeats the process of step S5. When the reverse rotation energization starting condition is satisfied, the ECU 6 starts the energization to the ignition coil (step S6).

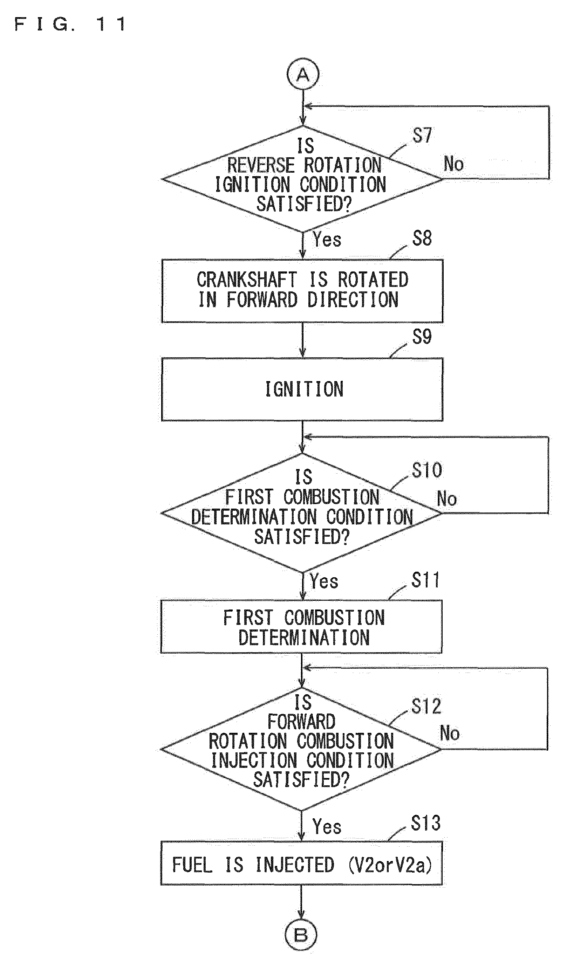

Next, as shown in Fig. 11, the ECU 6 determines whether a reverse rotation ignition condition is satisfied (step S7). In the present example, the reverse rotation ignition condition is that a motor current acquired from a result of detection by the current sensor 44 (Fig. 2) reaches a predetermined threshold value. The motor current is increased as the crank angle becomes closer to the angle A2 of Fig. 4. In the present example, when the crank angle reaches the angle A31 of Fig. 4, the motor current reaches the threshold value.

When the reverse rotation ignition condition is not satisfied, the ECU 6 repeats the process of step S7. When the reverse rotation ignition condition is satisfied, the ECU 6 controls the integrated starter generator 14 such that the crankshaft 13 is rotated in the forward direction (step S8), and controls the ignition plug 18 such that the fuel-air mixture in the combustion chamber 31 a is ignited (step S9).

Next, the ECU 6 determines whether a first combustion determination condition is satisfied (step S10). In the present example, the first combustion determination condition is that the crank angle acquired from the results of detection of the intake pressure sensor 42 (Fig. 2) and the crank angle sensor 43 (Fig. 2) reaches the angle A32 of Fig. 5. When the first combustion determination condition is not satisfied, the ECU 6 repeats the process of step S10. When the first combustion determination condition is satisfied, the ECU 6 makes the first combustion determination (step S11).

Then, the ECU 6 determines whether a forward rotation fuel injection condition is satisfied (step S12). In the present example, the forward rotation fuel injection condition is that the crank angle acquired from the results of detection of the intake pressure sensor 42 (Fig. 2) and the crank angle sensor 43 (Fig. 2) reaches the angle A11 of Fig. 5. When the forward rotation fuel injection condition is not satisfied, the ECU 6 repeats the process of step S12. When the forward rotation fuel injection condition is satisfied, the ECU 6 controls the injector 19 (Fig. 2) such that the fuel is injected into the intake passage 22 (Fig. 2) (step S13).

In this case, an amount of injection of the fuel is set based on the result of the first combustion determination in step S11. As described above, when the first condition is satisfied in the first combustion determination, the amount of injection of the fuel is set to V2. On the other hand, when the first condition is not satisfied in the first combustion determination, the amount of injection of the fuel is set to V2a that is smaller than V2.

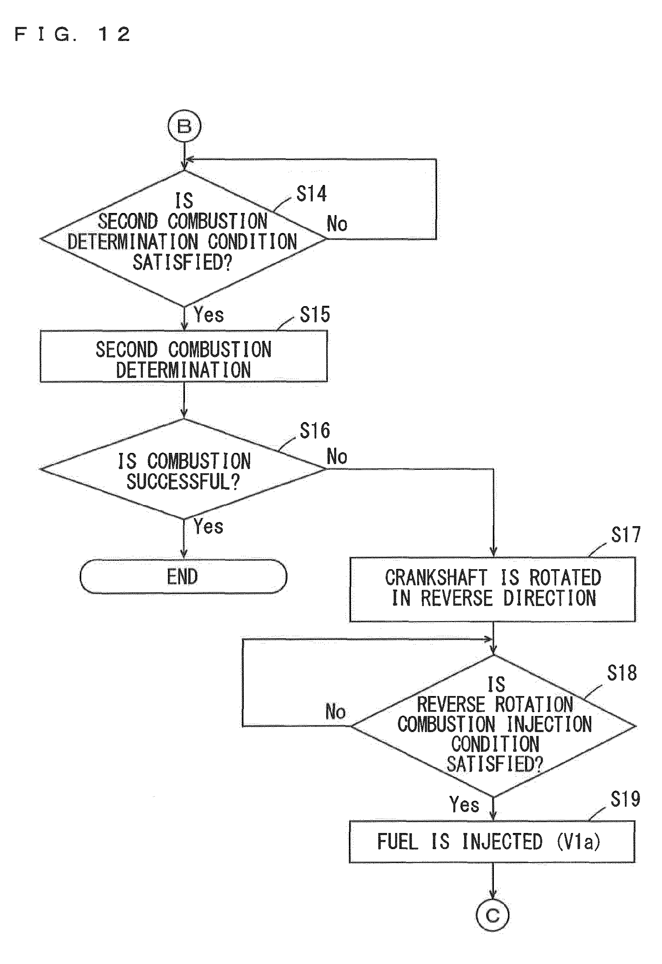

Next, as shown in Fig. 12, the ECU 6 determines whether a second combustion determination condition is satisfied (step S14). In the present example, the second combustion determination condition is that the crank angle acquired from the results of detection of the intake pressure sensor 42 (Fig. 2) and the crank angle sensor 43 (Fig. 2) reaches the angle A33 of Fig. 5. When the second combustion determination condition is not satisfied, the ECU 6 repeats the process of step S14. When the second combustion determination condition is satisfied, the ECU 6 makes the second combustion determination (step S15).

Then, the ECU 6 determines whether the fuel-air mixture is successfully combusted by the ignition in step S9 of Fig. 11 based on the results of the first combustion determination in step S11 of Fig. 11 and the second combustion determination in step S14 of Fig. 12 (step S16).

When the fuel-air mixture is successfully combusted, the ECU 6 terminates the engine start-up process. In this case, the crank angle exceeds the angle corresponding to the first compression top dead center by the energy generated by the combustion of the fuel-air mixture, and the engine unit EU is shifted to the normal operation of Fig. 3.

On the other hand, when the fuel-air mixture is not successfully combusted, the ECU 6 controls the integrated starter generator 14 such that the crankshaft 13 is rotated in the reverse direction again (step S17). Next, the ECU 6 determines whether the reverse rotation fuel injection condition is satisfied (step S18). The reverse rotation fuel injection condition is the same as that in step S3 of Fig. 10. When the reverse rotation fuel injection condition is not satisfied, the ECU 6 repeats the process of step S18. When the reverse rotation fuel injection condition is satisfied, the ECU 6 controls the injector 19 (Fig. 2) such that the fuel is injected into the intake passage 22 (Fig. 2) (step S19). In this case, the amount of injection of the fuel is set to V1 a that is smaller than the amount of injection V1 in step S4. Thereafter, the ECU 6 returns to the process of step S5. Thus, the reverse rotation start-up operation is repeated.

### (5) Effects

In the engine system 200 according to the present embodiment, the first and second combustion determinations are performed after the ignition of the fuel-air mixture in the reverse rotation start-up operation, and the reverse rotation start-up operation is repeated when it is determined that the fuel-air mixture is not successfully combusted. In this case, the fuel flows in the intake passage 22, the exhaust passage 24 and the combustion chamber 31 a together with the gas (fuel-air mixture). This promotes atomization of the fuel and thus gradually increases the fuel-air mixture concentration. Accordingly, the fuel-air mixture can be finally appropriately combusted. Therefore, the crankshaft 13 can be rotated such that the crank angle exceeds the angle corresponding to the first compression top dead center. As a result, the engine 10 can be appropriately started.

Further, when the crank angle is in the normal exhaust range (the range from the angle A15 to the angle A16) during the reverse rotation of the crank shaft 13, the exhaust port 23 is opened. In this case, the exhaust port 23 is opened in the same crank angle range during both the forward and reverse rotations of the crankshaft 13. This reduces the tendency of complexity of the configuration of the valve driver 17.

Further, in the present embodiment, after the fuel-air mixture is ignited in the reverse rotation start-up operation, the first combustion determination is performed at the angle A32 before the crank angle reaches the normal intake range, and the second combustion determination is performed at the angle A33 after the crank angle has passed the normal intake range. In this manner, the combustion determination is performed in a step- by-step manner, so that it can be appropriately determined whether the fuel-air mixture is successfully combusted. Thus, the engine 10 can be appropriately started.

Further, in the present embodiment, the amount of injection at the combustion at the angle A11 is adjusted based on the result of the first combustion determination. Thus, respective suitable amounts of the fuel for the ignition in the normal operation and the ignition in the subsequent reverse rotation start-up operation can be injected. Therefore, the fuel-air mixture having respective suitable concentration can be introduced into the combustion chamber 31 a.

Further, in the present embodiment, the amount of injection of the fuel at the angle A23 in the first reverse rotation start-up operation is different from the amount of injection of the fuel at the angle A23 in the second and subsequent reverse rotation start-up operations. Thus, the fuel-air mixture concentration in the combustion chamber 31a can be gradually increased while the fuel is prevented from being wastefully consumed.

### (6) Another Example of Reverse Rotation Start-up Operation

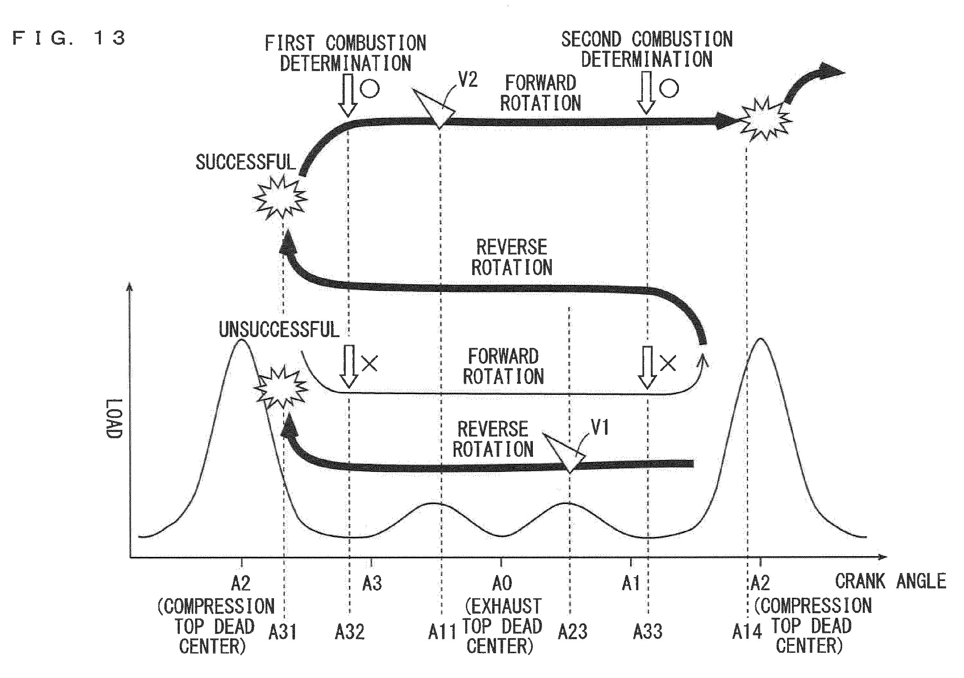

Fig. 13 is a schematic diagram for explaining another example of the reverse rotation start-up operation. In the example of Fig. 13, the fuel-air mixture is not successfully combusted by the ignition at the angle A31 in the first reverse rotation start-up operation. Thus, the first condition is not satisfied in the first combustion determination. In this case, no fuel is injected at the angle A11 right thereafter. Also, no fuel is injected at the angle A23 during the reverse rotation of the crankshaft 13 in the second reverse rotation start-up operation. After that, the fuel-air mixture is successfully combusted by the ignition at the angle A31, so that the first condition is satisfied in the first combustion determination. In this case, the fuel is injected at the angle A11 after the first combustion determination.

In this manner, in the example of Fig. 13, no fuel is injected until the fuel-air mixture is successfully combusted in the second and subsequent reverse rotation start-up operations after the unsuccessful combustion of the fuel-air mixture in the first reverse rotation start-up operation. Even in this case, because of the repeated reverse rotation start-up operation as described above, the atomization of unvaporized fuel is proceeded, so that the fuel-air mixture concentration in the combustion chamber 31 a is increased. Accordingly, the fuel-air mixture is likely to be successfully combusted because of the repeated reverse rotation start-up operation.

### (7) Other Examples of Amount of Injection of Fuel

While the amount of injection of the fuel at the angle A23 in the first reverse rotation start-up operation is set to V1, and the amount of injection of the fuel at the angle A23 in the second and subsequent reverse rotation start-up operations is set to V1a in the above-mentioned embodiment, the present invention is not limited to this.

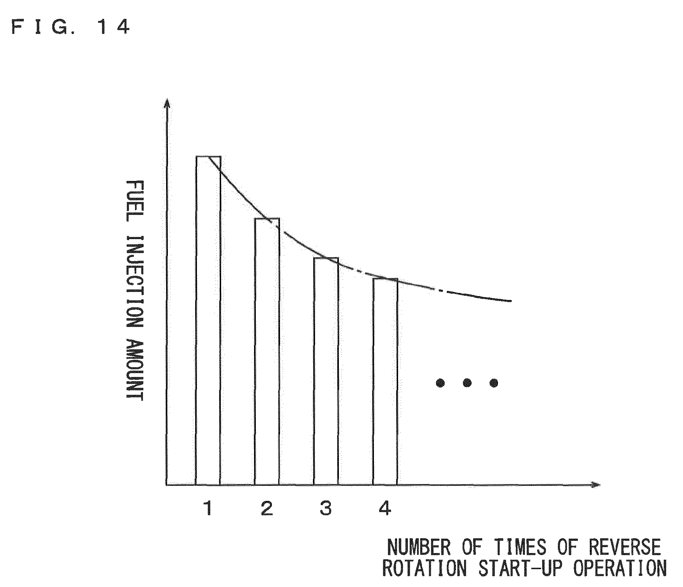

, Fig. 14 is a diagram for explaining other examples of the amount of injection of the fuel. In Fig. 14, the abscissa indicates the number of times of the reverse rotation start-up operation, and the ordinate indicates the amount of injection of the fuel at the angle A23. As described above, the reverse rotation start-up operation is repeated, so that the fuel-air mixture concentration in the combustion chamber 31 a is gradually increased. Thus, in the example of Fig. 14, the amount of injection of the fuel is adjusted to be gradually reduced as the number of times of the reverse rotation start-up operation is increased. Accordingly, the fuel is prevented from being wastefully consumed, and the fuel-air mixture concentration in the combustion chamber 31a is prevented from being excessively high.

Further, the amount of injection of the fuel at the angle A11 when the fuel-air mixture is not successfully combusted in the reverse rotation start-up operation may also be adjusted to be gradually reduced as the number of times of the reverse rotation start-up operation is increased similarly to the example of Fig. 14.

### (8) Other Embodiments

### (8-1)

While the combustion determination is performed twice including the first and second combustion determinations after the fuel-air mixture is ignited in the reverse rotation start-up operation in the above-mentioned embodiment, the present invention is not limited to this. Only one of the first and second combustion determinations may be performed. Further, the number of times of the combustion determination to be performed, and the crank angle at which the combustion determination is performed, are not limited to the above-mentioned example, but can be suitably changed. For example, the combustion determination based on the rotation state of the crankshaft may be continuously performed in the range from the angle A32 to the angle A33, and it may be determined whether the fuel-air mixture is successfully combusted.

### (8-2)

While the amount of injection of the fuel at the angle A11 is adjusted based on the results of the first and second combustion determinations in the above-mentioned embodiment, the amount of injection of the fuel at the angle A11 may be constant regardless of the results of the first and second combustion determinations. Further, while the amount of injection of the fuel at the angle A23 is adjusted based on the number of times of the repetition of the reverse rotation start-up operation in the above-mentioned embodiment, the amount of injection of the fuel at the angle A23 may be constant regardless of the number of times of the repetition of the reverse rotation start-up operation.

### (8-3)

Further, while the intake port 21 is opened in the range from the angle A13 to the angle A12 during the reverse rotation of the crankshaft 13 in the above-mentioned embodiment, the intake port 21 does not have to be opened in this range.

### (8-4)

While the above-mentioned embodiment is an example in which the present invention is applied to the motorcycle, the invention is not limited to this. The present invention may be applied to another straddled vehicle such as a motor tricycle, an ATV (All-Terrain Vehicle) or the like.

### (9) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the engine unit EU is an example of an engine unit, the engine 10 is an example of an engine, the integrated starter generator 14 is an example of an integrated starter generator, the ECU 6 is an example of a controller, the injector 19 is an example of a fuel injection device, the ignition plug 18 is an example of an ignition device, the valve driver 17 is an example of a valve driver, the intake valve 15 is an example of an intake valve, the exhaust valve 16 is an example of an exhaust valve, the crank angle sensor 43 is an example of a rotation state detector, and the crankshaft 13 is an example of a crankshaft. Further, the first and second conditions are examples of a start-up condition, the first condition is an example of a start-up preparation condition. Further, the motorcycle 100 is an example of a straddled vehicle, the rear wheel 7 is an example of a drive wheel, and the vehicle body 1 is an example of a main body.

As each of constituent elements recited in the claims, various other elements having configurations or functions described in the claims can be also used.

### [Industrial Applicability]

The present invention is applicable to various types of engine systems and straddled vehicles.

## Claims

1. An engine system comprising:
an engine unit that includes an engine and a rotation driver; and
a controller that controls the engine unit, wherein
the engine includes
a fuel injection device that is arranged to inject fuel into an intake passage for leading air to a combustion chamber,
an ignition device that is configured to ignite a fuel-air mixture in the combustion chamber,
a valve driver that is configured to drive each of an intake valve for opening and closing an intake port and an exhaust valve for opening and closing an exhaust port, and
a rotation state detector that detects a rotation state of the crankshaft,
the rotation driver is configured to drive rotation of the crankshaft in forward and reverse directions,
the controller controls the engine unit during start-up of the engine such that a reverse rotation start-up operation is performed in which the crankshaft is rotated in the forward direction after being rotated in the reverse direction,
the rotation driver rotates the crankshaft in the reverse direction in the reverse rotation start-up operation such that a crank angle exceeds a predetermined start-up intake range and reaches a predetermined start-up ignition range,
the valve driver drives the intake valve such that the intake port is opened when the crankshaft is rotated in the reverse direction and the crank angle is in the start-up intake range, and drives the exhaust valve such that the exhaust port is opened when the crankshaft is rotated in the reverse direction and the crank angle is in a normal exhaust range including the start-up intake range, in the reverse rotation start-up operation,
the ignition device ignites the fuel-air mixture in the combustion chamber when the crank angle is in the start-up ignition range in the reverse rotation start-up operation,
the controller controls the engine unit such that the reverse rotation start-up operation is performed again, in a case in which a rotation state detected by the rotation state detector does not satisfy a predetermined start-up condition, when the crankshaft is rotated in the forward direction in the reverse rotation start-up operation and before a piston reaches a first compression top dead center, and
the fuel injection device injects the fuel such that the fuel-air mixture is introduced into the combustion chamber from the intake passage through the intake port when the crankshaft is rotated in the reverse direction and the crank angle is in the start-up intake range, in at least the first reverse rotation operation during the start-up of the engine.

2. The engine system according to claim 1, wherein
the valve driver drives the exhaust valve such that the exhaust port is opened when the crank angle is in the normal exhaust range during the rotation of the crankshaft in the forward direction.

3. The engine system according to claim 1 or 2, wherein
the controller controls the engine unit such that the crankshaft is continuously rotated in the forward direction by combustions of the fuel-air mixture, in a case in which the rotation state detected by the rotation state detector satisfies the start-up condition when the crankshaft is rotated in the forward direction in the reverse rotation start-up operation and before the piston reaches the first compression top dead center.

4. The engine unit according to any one of claims 1 to 3, wherein the start-up condition is that a rotation speed of the crankshaft is higher than a predetermined threshold value.

5. The engine unit according to any one of claims 1 to 3, wherein the start-up condition is that a rate of change of a rotation speed of the crankshaft is larger than a predetermined threshold value.

6. The engine system according to any one of claims 1 to 5, wherein
the valve driver drives the intake valve such that the intake port is opened when the crankshaft is rotated in the forward direction and the crank angle is in a predetermined normal intake range, and
the controller controls the engine unit such that the reverse rotation start-up operation is performed again, in a case in which the rotation state detected by the rotation state detector does not satisfy the start-up condition at a first point of time at which the crank angle has passed the normal intake range when the crankshaft is rotated in the forward direction in the reverse rotation start-up operation.

7. The engine system according to claim 6, wherein
the fuel injection device injects a first amount of fuel such that the fuel-air mixture is introduced into the combustion chamber from the intake passage through the intake port when the crank angle is in the normal intake range, in a case in which the rotation state detected by the rotation state detector does not satisfy a predetermined start-up preparation condition at a second point of time before the crank angle reaches the normal intake range when the crankshaft is rotated in the forward direction in the reverse rotation start-up operation, and
the fuel injection device injects a second amount of fuel that is different from the first amount such that the fuel-air mixture is introduced into the combustion chamber from the intake passage through the intake port when the crank angle is in the normal intake range, in a case in which the rotation state detected by the rotation state detector satisfies the start-up preparation condition at the second point of time.

8. The engine system according to any one of claims 1 to 5, wherein
the valve driver drives the intake valve such that the intake port is opened when the crankshaft is rotated in the forward direction and the crank angle is in a predetermined normal intake range,
the fuel injection device injects a first amount of fuel such that the fuel-air mixture is introduced into the combustion chamber from the intake passage through the intake port when the crank angle is in the normal intake range, in a case in which the rotation state detected by the rotation state detector does not satisfy the start-up condition at a second point of time before the crank angle reaches the normal intake range when the crankshaft is rotated in the forward direction in the reverse rotation start-up operation, and
the fuel injection device injects a second amount of fuel that is different from the first amount such that the fuel-air mixture is introduced into the combustion chamber from the intake passage through the intake port when the crank angle is in the normal intake range, in a case in which the rotation state detected by the rotation state detector satisfies the start-up condition at the second point of time.

9. The engine system according to any one of claims 1 to 8, wherein
the fuel injection device injects a third amount of fuel such that the fuel-air mixture is introduced into the combustion chamber from the intake passage through the intake port when the crankshaft is rotated in the reverse direction and the crank angle is in the start-up intake range in the first reverse rotation start-up operation during the start-up of the engine, and
the fuel injection device injects a fourth amount of fuel that is different from the third amount such that the fuel-air mixture is introduced into the combustion chamber from the intake passage through the intake port when the crankshaft is rotated in the reverse direction and the crank angle is in the start-up intake range in the second reverse rotation start-up operation during the start-up of the engine.

10. A straddled vehicle comprising:
a main body having a drive wheel, and
an engine system according to any one of claims 1 to 9 that generates motive power for rotating the drive wheel.
